# EUROPEAN PATENT APPLICATION

(11) **EP 4 819 515 A1**
(43) Date of publication of application: **07.10.2026**
(21) Application number: 24896542.8
(22) Date of filing: 26.11.2024
(51) Int. Cl.: H04L 1/00

(54) **COMMUNICATION METHOD AND COMMUNICATION APPARATUS**

(30) Priority: 27.11.2023 CN 202311604112
(71) Applicant: Huawei Technologies Co., Ltd., Shenzhen, Guangdong 518129 (CN)
(72) Inventor: QIN, Kangjian, Shenzhen, Guangdong 518129 (CN); ZHANG, Huazi, Shenzhen, Guangdong 518129 (CN); WANG, Xianbin, Shenzhen, Guangdong 518129 (CN); LIU, Ke, Shenzhen, Guangdong 518129 (CN); TONG, Jiajie, Shenzhen, Guangdong 518129 (CN); WANG, Jun, Shenzhen, Guangdong 518129 (CN)
(74) Representative: Huawei European IPR
(86) International application number: PCT/CN2024/134686
(87) International publication number: WO 2025/113455

(57) **Abstract**

This application provides a communication method and a communication apparatus, applied to the communication field. In the technical solutions provided in this application, a network device may perform, based on a first subsequence, sub-block interleaving processing on a first to-be-interleaved sequence including N sub-blocks. The first subsequence includes N elements, the N elements are in one-to-one correspondence with the N sub-blocks, each of the N elements indicates a sequence number of a corresponding sub-block in the first to-be-interleaved sequence, and the first subsequence meets a preset relationship. This application provides a channel coding scheme in low power consumption scenarios.

## Description

This application claims priority to Chinese Patent Application No. 202311604112.3, filed with the China National Intellectual Property Administration on November 27, 2023 and entitled "COMMUNICATION METHOD AND COMMUNICATION APPARATUS", which is incorporated herein by reference in its entirety.

### TECHNICAL FIELD

This application relates to the field of wireless communication, and in particular, to a communication method and a communication apparatus.

### BACKGROUND

In release 18 (release 18, R18) of the 3rd generation partnership project (3rd generation partnership project, 3GPP), a low-power wake-up signal (low-power wake-up signal, LP-WUS) was introduced to support a low-latency ultra-low power consumption mechanism for terminal devices in R18. The terminal device monitors the LP-WUS by using a separate low-power wake-up receiver (low-power wake-up receiver, LP-WUR), and processes uplink and downlink data by using a main receiver. Before receiving the LP-WUS, the terminal device sets the main receiver to an off state or a deep sleep state. After receiving the LP-WUS, the terminal device wakes up the main receiver for data receiving and transmission, thereby achieving energy saving. However, with the introduction of the LP-WUS is introduced, a channel coding scheme used for LP-WUS transmission becomes an urgent problem to be resolved.

### SUMMARY

Embodiments of this application provide a communication method and a communication apparatus, applied to the field of wireless communication. This application provides a channel coding scheme for transmission of a low-power wake-up signal (low-power wake-up signal, LP-WUS) in low power consumption scenarios.

According to a first aspect, this application provides a communication method. The method is applied to a network device, and the method includes: obtaining a first to-be-interleaved sequence, where the first to-be-interleaved sequence includes N sub-blocks, and N is an integer greater than 1; and performing sub-block interleaving processing on the first to-be-interleaved sequence based on a first subsequence, where the first subsequence includes N elements, the N elements are in one-to-one correspondence with the N sub-blocks, each of the N elements indicates a sequence number of a corresponding sub-block in the first to-be-interleaved sequence, and the first subsequence meets a preset relationship.

For example, the method may be performed by the network device, or may be performed by a chip system, a hardware circuit, and/or a software module used in the network device.

For example, in low power consumption scenarios, when the network device sends a low-power wake-up signal (low-power wake-up signal, LP-WUS) to a terminal device, the network device may implement rate matching based on a rate matching manner of sub-block interleaving after encoding the LP-WUS according to a polar (polar) code-based channel coding scheme. For example, when an encoded LP-WUS is a polar code with a mother code length of Z (Z is a positive integer power of 2), the network device may divide Z polar code bits into N sub-blocks. N is an integer greater than 1, and each sub-block may include Z/N bits. In this case, a sequence including the N sub-blocks may be referred to as the first to-be-interleaved sequence. After determining the first to-be-interleaved sequence, the network device may perform sub-block interleaving processing on the first to-be-interleaved sequence based on a first subsequence S(j) to obtain a first interleaved sequence, so as to obtain Z interleaved bit sequences, and perform rate matching on the Z interleaved bit sequences in a sub-block-based rate matching manner. A sub-block whose sequence number is j in the first interleaved sequence may correspond to a sub-block whose sequence number is S(j) in the first to-be-interleaved sequence.

In this technical solution, the first subsequence S(j) may include N elements, the N elements may be in one-to-one correspondence with the N sub-blocks, and each of the N elements may indicate a sequence number of a corresponding sub-block in the first to-be-interleaved sequence. That the first subsequence meets the preset relationship may be understood as that the N elements in the first subsequence meet the preset relationship. The preset relationship may be set based on an actual requirement. This is not specifically limited herein.

This technical solution provides a channel coding scheme for transmission of an LP-WUS in low power consumption scenarios, so that the network device can perform transmission of the LP-WUS based on the channel coding scheme.

With reference to the first aspect, in some implementations of the first aspect, that the first subsequence meets the preset relationship includes: The first subsequence and a first sequence meets the preset relationship, where the first sequence is a known sequence.

In this implementation, the first sequence may be a known sequence in the existing communication field, so that the network device can determine the first subsequence based on the first sequence and the preset relationship between the first sequence and the first subsequence.

For example, that the first subsequence and the first sequence meet the preset relationship may be understood as that the preset relationship exists between an element included in the first subsequence and an element included in the first sequence.

With reference to the first aspect, in some implementations of the first aspect, the first subsequence includes an element less than N in the first sequence, N is less than or equal to M, and M is a length of the first sequence; or the first subsequence includes an element less than N in a second subsequence, and the second subsequence is a sequence including a difference between each of elements greater than or equal to N in the first sequence and N.

For example, the length of the first sequence may be understood as a quantity of elements included in the first sequence.

For example, the first subsequence may include an element whose element value is less than N in the first sequence.

For example, elements whose element values are greater than or equal to N in the first sequence may be extracted, and a sequence including a difference between each of extracted elements and N is used as the second subsequence. The first subsequence may include an element whose element value is less than N in the second subsequence.

With reference to the first aspect, in some implementations of the first aspect, the first subsequence includes an element less than N in a third subsequence, the third subsequence is a sequence formed by a quotient obtained by dividing, by a first ratio, an element in the first sequence that yields a remainder R when divided by the first ratio, the first ratio is a quotient of M divided by N, N is less than or equal to M, M is a length of the first sequence, and R includes a non-negative integer less than the first ratio.

In this implementation, elements that are in the first sequence and for which remainders of division of element values by the first ratio are R may be extracted, and a sequence including a quotient obtained by dividing each of extracted elements by the first ratio is used as the third subsequence. The first subsequence may include an element whose element value is less than N in the third subsequence. For example, when the first ratio is 2, R may be 0 or 1.

With reference to the first aspect, in some implementations of the first aspect, the first subsequence includes an element less than N in a fourth subsequence, the fourth subsequence is a sequence formed by a quotient of each element in the first sequence divided by a first ratio, the first ratio is a quotient of M divided by N, N is less than or equal to M, and M is a length of the first sequence.

In this implementation, the sequence formed by the quotient of each element in the first sequence divided by the first ratio may be used as the fourth subsequence, and the first subsequence may include an element whose element value is less than N in the fourth subsequence.

With reference to the first aspect, in some implementations of the first aspect, the first subsequence includes an element less than N in a fifth subsequence, the fifth subsequence is a sequence formed by quotients of a plurality of elements included in the first sequence divided by 2, the plurality of elements are in one-to-one correspondence with a plurality of sub-blocks, each of the plurality of elements indicates a sequence number of a corresponding sub-block in a second to-be-interleaved sequence, a sequence number of each of the plurality of sub-blocks in an interleaved sequence is an odd number or an even number, and the interleaved sequence is obtained by performing sub-block interleaving processing on the second to-be-interleaved sequence by the first sequence.

For example, the interleaved sequence may be understood as a second interleaved sequence. For example, the network device may perform sub-block interleaving processing on the second to-be-interleaved sequence based on the first sequence, to obtain the second interleaved sequence.

In this implementation, a plurality of sub-blocks whose sequence numbers are odd numbers or even numbers in the second interleaved sequence may be extracted, a plurality of elements that are in the first sequence and that are in one-to-one correspondence with the plurality of sub-blocks are extracted, and a sequence including a quotient obtained by dividing each of the plurality of elements by 2 is used as the fifth subsequence. The first subsequence may include an element whose element value is less than N in the fifth subsequence.

With reference to the first aspect, in some implementations of the first aspect, that the first subsequence meets a first preset relationship includes: The first subsequence is any one of the following sequences: {0 1 2 3 4 8 5 9 6 10 7 11 12 13 14 15}, {0 1 2 4 3 5 6 7 8 9 10 11 12 13 14 15}, {0 1 2 3 4 5 6 7 8 9 10 12 11 13 14 15}, {0 3 2 1 4 5 8 7 6 9 10 11 15 13 14 12}, or {0 3 2 1 4 5 8 7 6}.

For example, when the first subsequence is {0 1 2 4 3 5 6 7 8 9 10 11 12 13 14 15}, the network device may perform sub-block interleaving processing on the first to-be-interleaved sequence based on the first subsequence, to obtain the first interleaved sequence. A sub-block whose sequence number is 3 in the first to-be-interleaved sequence before interleaving is located at a 5^{th} bit in the first interleaved sequence after interleaving processing, and a sub-block whose sequence number is 4 in the first to-be-interleaved sequence before interleaving is located at a 4^{th} bit in the first interleaved sequence after interleaving processing. In this example, positions of the sub-blocks whose sequence numbers are 3 and 4 in the first to-be-interleaved sequence before interleaving are exchanged after interleaving processing.

With reference to the first aspect, in some implementations of the first aspect, that the first subsequence meets the preset relationship includes: An (i+A)^{th} element in the first subsequence is equal to a sum of an i^{th} element and A, where N=2×A, A is an integer greater than 1, and i is a positive integer less than or equal to A.

In this implementation, the (i+A)^{th} element and the i^{th} element in the first subsequence meet the preset relationship. Therefore, after the first A elements in the first subsequence are determined, an (A+1)^{th} element to a (2A)^{th} element in the first subsequence may be determined based on the first A elements.

With reference to the first aspect, in some implementations of the first aspect, a j^{th} element in the first subsequence is equal to a j^{th} element in a first sequence, and j is a positive integer less than or equal to A.

In this implementation, the first A elements in the first subsequence may be determined based on the first sequence.

For example, when A=M, the first A elements in the first subsequence may include M elements in the first sequence.

For example, when A=X×M, and X is an integer greater than 1, the first M elements in the first subsequence may include the M elements in the first sequence. In an (M+1)^{th} element to a (2M)^{th} element in the first subsequence, a (c+M)^{th} element may be a sum of a c^{th} element and M, so that the first 2M elements in the first subsequence can be determined, and then the first A elements in the first subsequence can be determined, where c is a positive integer less than or equal to M.

With reference to the first aspect, in some implementations of the first aspect, that the first subsequence meets the preset relationship includes: An (i+A)^{th} element in the first subsequence is equal to a sum of an i^{th} element and 1, where N=2×A, A is an integer greater than 1, and i is a positive integer less than or equal to A.

In this implementation, the (i+A)^{th} element and the i^{th} element in the first subsequence meet the preset relationship. Therefore, after the first A elements in the first subsequence are determined, an (A+1)^{th} element to a (2A)^{th} element in the first subsequence may be determined based on the first A elements.

With reference to the first aspect, in some implementations of the first aspect, a j^{th} element in the first subsequence is equal to T times a j^{th} element in a first sequence, T is a ratio of N to M, M is a length of the first sequence, and j is a positive integer less than or equal to A.

In this implementation, the first A elements in the first subsequence may be determined based on the first sequence.

For example, when A=M, T=2, and the first A elements in the first subsequence may include a value obtained by multiplying each of M elements in the first sequence by 2. For example, when the first sequence is {0 1}, the first A elements in the first subsequence may be {0 2}.

For example, when A=X×M, and X is an integer greater than 1, T=2×X, and the first M elements in the first subsequence may be values obtained by multiplying the M elements in the first sequence by 2×X. In an (M+1)^{th} element to a (2M)^{th} element in the first subsequence, a (c+M)^{th} element may be a sum of a c^{th} element and 1, so that the first 2M elements in the first subsequence can be determined, and then the first A elements in the first subsequence can be determined, where c is a positive integer less than or equal to M.

With reference to the first aspect, in some implementations of the first aspect, the first sequence is {0 1 2 4 3 5 6 7 8 16 9 17 10 18 11 19 12 20 13 21 14 22 15 23 24 25 26 28 27 29 30 31}.

In this implementation, the first sequence may be the foregoing sub-block interleaving sequence whose length is 32.

With reference to the first aspect, in some implementations of the first aspect, that the first subsequence meets the preset relationship includes: The first subsequence is {0 1 2 4 3 5 6 7 8 16 9 17 10 18 11 19 12 20 13 21 14 22 15 23 24 25 26 28 27 29 30 31 32 33 34 36 35 37 38 39 40 48 41 49 42 50 43 51 44 52 45 53 46 54 47 55 56 57 58 60 59 61 62 63} or {0 2 4 8 6 10 12 14 16 32 18 34 20 36 22 38 24 40 26 42 28 44 30 46 48 50 52 56 54 58 60 62 1 3 5 9 7 11 13 15 17 33 19 35 21 37 23 39 25 41 27 43 29 45 31 47 49 51 53 57 55 59 61 63}.

In this implementation, when a length of the first subsequence is 64, the first subsequence may be {0 1 2 4 3 5 6 7 8 16 9 17 10 18 11 19 12 20 13 21 14 22 15 23 24 25 26 28 27 29 30 31 32 33 34 36 35 37 38 39 40 48 41 49 42 50 43 51 44 52 45 53 46 54 47 55 56 57 58 60 59 61 62 63}, or the first subsequence may be {0 2 4 8 6 10 12 14 16 32 18 34 20 36 22 38 24 40 26 42 28 44 30 46 48 50 52 56 54 58 60 62 1 3 5 9 7 11 13 15 17 33 19 35 21 37 23 39 25 41 27 43 29 45 31 47 49 51 53 57 55 59 61 63}.

According to a second aspect, this application provides a communication apparatus. The apparatus includes modules configured to implement the method according to the first aspect or any one of the implementations of the first aspect, and each module may be implemented in a form of hardware and/or software.

For example, the apparatus may include an obtaining module and a processing module. The obtaining module is configured to obtain a first to-be-interleaved sequence, where the first to-be-interleaved sequence includes N sub-blocks, and N is an integer greater than 1. The processing module is configured to perform sub-block interleaving processing on the first to-be-interleaved sequence based on a first subsequence, where the first subsequence includes N elements, the N elements are in one-to-one correspondence with the N sub-blocks, each of the N elements indicates a sequence number of a corresponding sub-block in the first to-be-interleaved sequence, and the first subsequence meets a preset relationship.

With reference to the second aspect, in some implementations of the second aspect, that the first subsequence meets the preset relationship includes: The first subsequence and a first sequence meets the preset relationship, where the first sequence is a known sequence.

With reference to the second aspect, in some implementations of the second aspect, the first subsequence includes an element less than N in the first sequence, N is less than or equal to M, and M is a length of the first sequence; or the first subsequence includes an element less than N in a second subsequence, and the second subsequence is a sequence including a difference between each of elements greater than or equal to N in the first sequence and N.

With reference to the second aspect, in some implementations of the second aspect, the first subsequence includes an element less than N in a third subsequence, the third subsequence is a sequence formed by a quotient obtained by dividing, by a first ratio, an element in the first sequence that yields a remainder R when divided by the first ratio, the first ratio is a quotient of M divided by N, N is less than or equal to M, M is a length of the first sequence, and R includes a non-negative integer less than the first ratio.

With reference to the second aspect, in some implementations of the second aspect, the first subsequence includes an element less than N in a fourth subsequence, the fourth subsequence is a sequence formed by a quotient of each element in the first sequence divided by a first ratio, the first ratio is a quotient of M divided by N, N is less than or equal to M, and M is a length of the first sequence.

With reference to the second aspect, in some implementations of the second aspect, the first subsequence includes an element less than N in a fifth subsequence, the fifth subsequence is a sequence formed by quotients of a plurality of elements included in the first sequence divided by 2, the plurality of elements are in one-to-one correspondence with a plurality of sub-blocks, each of the plurality of elements indicates a sequence number of a corresponding sub-block in a second to-be-interleaved sequence, a sequence number of each of the plurality of sub-blocks in an interleaved sequence is an odd number or an even number, and the interleaved sequence is obtained by performing sub-block interleaving processing on the second to-be-interleaved sequence by the first sequence.

With reference to the second aspect, in some implementations of the second aspect, that the first subsequence meets a first preset relationship includes: The first subsequence is any one of the following sequences: {0 1 2 3 4 8 5 9 6 10 7 11 12 13 14 15}, {0 1 2 4 3 5 6 7 8 9 10 11 12 13 14 15}, {0 1 2 3 4 5 6 7 8 9 10 12 11 13 14 15}, {0 3 2 1 4 5 8 7 6 9 10 11 15 13 14 12}, or {0 3 2 1 4 5 8 7 6}.

With reference to the second aspect, in some implementations of the second aspect, that the first subsequence meets the preset relationship includes: An (i+A)^{th} element in the first subsequence is equal to a sum of an i^{th} element and A, where N=2×A, A is an integer greater than 1, and i is a positive integer less than or equal to A.

With reference to the second aspect, in some implementations of the second aspect, a j^{th} element in the first subsequence is equal to a j^{th} element in a first sequence, and j is a positive integer less than or equal to A.

With reference to the second aspect, in some implementations of the second aspect, that the first subsequence meets the preset relationship includes: An (i+A)^{th} element in the first subsequence is equal to a sum of an i^{th} element and 1, where N=2×A, A is an integer greater than 1, and i is a positive integer less than or equal to A.

With reference to the second aspect, in some implementations of the second aspect, a j^{th} element in the first subsequence is equal to T times a j^{th} element in a first sequence, T is a ratio of N to M, M is a length of the first sequence, and j is a positive integer less than or equal to A.

With reference to the second aspect, in some implementations of the second aspect, the first sequence is {0 1 2 4 3 5 6 7 8 16 9 17 10 18 11 19 12 20 13 21 14 22 15 23 24 25 26 28 27 29 30 31}.

With reference to the second aspect, in some implementations of the second aspect, that the first subsequence meets the preset relationship includes: The first subsequence is {0 1 2 4 3 5 6 7 8 16 9 17 10 18 11 19 12 20 13 21 14 22 15 23 24 25 26 28 27 29 30 31 32 33 34 36 35 37 38 39 40 48 41 49 42 50 43 51 44 52 45 53 46 54 47 55 56 57 58 60 59 61 62 63} or {0 2 4 8 6 10 12 14 16 32 18 34 20 36 22 38 24 40 26 42 28 44 30 46 48 50 52 56 54 58 60 62 1 3 5 9 7 11 13 15 17 33 19 35 21 37 23 39 25 41 27 43 29 45 31 47 49 51 53 57 55 59 61 63}.

According to a third aspect, this application provides a communication apparatus, including a processor. The processor may be coupled to a memory, and is configured to invoke program code in the memory, to perform the method according to the first aspect or any one of the possible implementations of the first aspect. Optionally, the apparatus further includes the memory. Optionally, the apparatus further includes a communication interface, and the processor is coupled to the communication interface.

Optionally, the apparatus may be a network device (for example, a base station), or may be a chip system, a hardware circuit, and/or a software module used in the network device.

According to a fourth aspect, this application provides a computer program product including instructions. When the computer program product is run on a computer, the computer is caused to perform the method according to the first aspect or any one of the possible implementations of the first aspect.

According to a fifth aspect, this application provides a computer-readable medium. The computer-readable medium stores program code to be executed by a device, and the program code is used to perform the method according to the first aspect or any one of the possible implementations of the first aspect.

For technical effects that may be achieved by any one of the third aspect to the fifth aspect and any possible design of any one of the third aspect to the fifth aspect, refer to descriptions of technical effects that may be achieved by the first aspect or any one of the possible implementations of the first aspect. Details are not described herein again.

### BRIEF DESCRIPTION OF DRAWINGS

FIG. 1 is a diagram of an application scenario according to an embodiment of this application;
FIG. 2 is a schematic flowchart of a communication system according to another embodiment of this application;
FIG. 3 is a diagram of a working principle of a low-power wake-up signal according to an embodiment of this application;
FIG. 4 is a schematic flowchart of a communication method according to an embodiment of this application;
FIG. 5 is a diagram of a structure of a communication apparatus according to an embodiment of this application; and
FIG. 6 is a diagram of a structure of a communication apparatus according to another embodiment of this application.

### DESCRIPTION OF EMBODIMENTS

Example embodiments are described in detail herein, and examples of the example embodiments are presented in the accompanying drawings. When the following description relates to the accompanying drawings, unless otherwise specified, same numbers in different accompanying drawings represent a same element or similar elements. Implementations described in the following example embodiments do not represent all implementations consistent with this application. On the contrary, the implementations are merely examples of apparatuses and methods that are described in the appended claims in detail and that are consistent with some aspects of this application.

The technical solutions provided in this application may be applied to various communication systems, including but not limited to a narrowband internet of things (narrowband internet of things, NB-IoT) system, a global system for mobile communications (global system for mobile communications, GSM), an enhanced data rate GSM evolution (enhanced data rate for GSM evolution, EDGE) system, a wideband code division multiple access (wideband code division multiple access, WCDMA) system, a code division multiple access (code division multiple access, CDMA) 2000 system, a time division-synchronous code division multiple access (time division-synchronous code division multiple access, TD-SCDMA) system, a long term evolution (long term evolution, LTE) system, and a 5th generation (5th generation, 5G) mobile communication system (for example, a 5G new radio (new radio, NR) communication system), various future evolved communication systems (for example, a 6th generation (6th generation, 6G) communication system), or a wireless communication system like satellite communication.

The technical solutions provided in this application may be further applied to three application scenarios of the 5G mobile communication system: enhanced mobile broadband (enhance mobile broadband, eMBB), ultra-reliable low-latency communication (ultra-reliable low-latency communication, URLLC), massive machine type communication (massive machine type of communication, mMTC), or another application scenario, for example, enhanced machine type communication (enhanced machine type communication, eMTC).

A terminal device in embodiments of this application may also be referred to as user equipment (UE), a mobile station (mobile station, MS), a mobile terminal (mobile terminal, MT), an access terminal, a subscriber unit, a subscriber station, a mobile station, a remote station, a remote terminal, a mobile device, a user terminal, a terminal, a wireless communication device, a user agent, a user apparatus, or the like. The terminal device may be a device that provides voice/data connectivity for users, for example, a handheld device or a vehicle-mounted device that has a wireless connection function. Currently, some examples of the terminal device are as follows: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a compute device or another processing device connected to a wireless modem, a vehicle-mounted device, a wearable device, a terminal device in a 5G network, a terminal device in a future evolved public land mobile network (public land mobile network, PLMN), and the like. This is not limited in embodiments of this application. In addition, in embodiments of this application, the terminal device may alternatively be a terminal device in an internet of things (internet of things, IoT) system. An IoT is an important part of future development of information technologies. A main technical feature of the IoT is connecting a thing to a network by using a communication technology, to implement an intelligent network for human-machine interconnection and thing-thing interconnection. In embodiments of this application, an apparatus configured to implement a function of the terminal device may be a terminal device, or may be an apparatus, for example, a chip system, that can support the terminal device in implementing the function. The apparatus may be installed in the terminal device. In embodiments of this application, the chip system may include a chip, or may include a chip and another discrete device.

A network device in embodiments of this application may be a device that provides a wireless communication function for the terminal device, and may also be referred to as an access network device or a radio access network device. The network device may be a transmission reception point (transmission reception point, TRP), an evolved NodeB (evolved NodeB, eNB, or eNodeB) in an LTE system, a home base station (for example, home evolved NodeB, or home NodeB, HNB), a baseband unit (baseband unit, BBU), or a radio controller in a cloud radio access network (cloud radio access network, CRAN) scenario. Alternatively, the network device may be a relay station, an access point, a vehicle-mounted device, a wearable device, a network device in a 5G network, a network device in a future evolved PLMN network, or the like, or may be an access point (access point, AP) in a WLAN, a gNB in a new radio (new radio, NR) system, a satellite base station in a satellite communication system, a device that bears a function of a network device in device-to-device (Device-to-Device, D2D), vehicle-to-everything (vehicle-to-everything, V2X), or machine-to-machine (machine-to-machine, M2M) communication, or the like. This is not limited in embodiments of this application. In a network structure, the network device may include a central unit (central unit, CU) node or a distributed unit (distributed unit, DU) node, or include radio access network (radio access network, RAN) devices in a CU node and a DU node, or include RAN devices in a control plane CU node (CU-CP node), a user plane CU node (CU-UP node), and a DU node. In embodiments of this application, an apparatus configured to implement a function of the network device may be a network device, or may be an apparatus, for example, a chip system, that can support the network device in implementing the function. The apparatus may be installed in the network device.

The network device serves a terminal device in a cell, and the terminal device communicates with the network device or another device corresponding to the cell by using a transmission resource (for example, a frequency domain resource, or a spectrum resource) allocated by the network device. The network device may be a macro base station (for example, a macro eNB or a macro gNB), or may be a base station corresponding to a small cell (small cell). The small cell herein may include a metro cell (metro cell), a micro cell (micro cell), a pico cell (pico cell), a femto cell (femto cell), and the like. These small cells have characteristics of small coverage and low transmit power, and are applicable to providing a high-rate data transmission service.

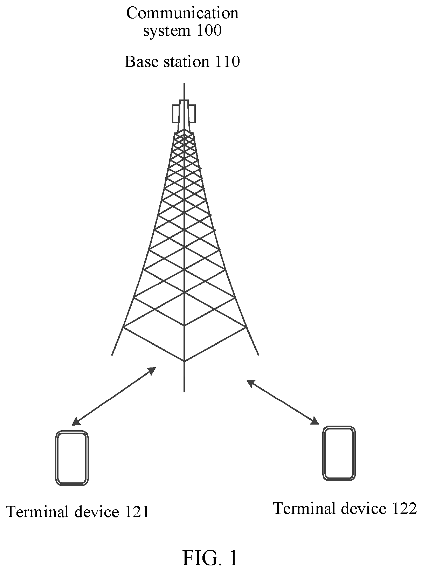

Embodiments of this application may be applicable to a 5G communication system. For example, FIG. 1 is a diagram of an application scenario according to an embodiment of this application. As shown in FIG. 1, a communication system 100 may include a base station 110, a terminal device 121, and a terminal device 122. A quantity of terminal devices is merely an example. This is not limited in this embodiment of this application.

The base station 110 may provide a communication service for terminal devices such as the terminal device 121 and the terminal device 122 in a cell. The base station 110 may send downlink information to the terminal device 121 and/or the terminal device 122. The downlink information may be control information or data information. This is not limited in this embodiment of this application. The terminal device 121 and/or the terminal device 122 may send uplink information to the base station 110.

The base station 110 may include a BBU and a remote radio unit (remote radio unit, RRU). The BBU and the RRU may be placed at different places. For example, the RRU is remote and placed in a heavy-traffic area, and the BBU is placed in a central equipment room. Alternatively, the BBU and the RRU may be placed in a same equipment room. Alternatively, the BBU and the RRU may be different components in one rack.

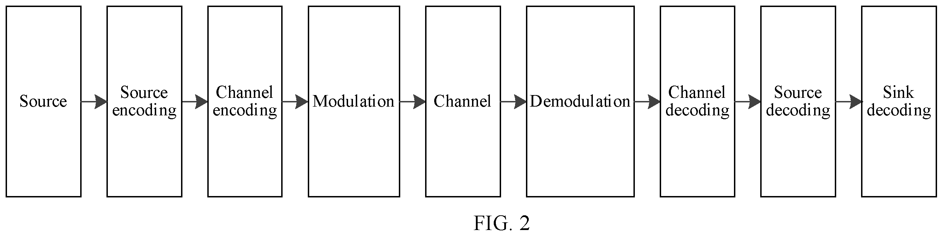

With reference to FIG. 2, the following describes in detail a procedure of a communication system during communication between a network device and a terminal device.

FIG. 2 is a schematic flowchart of a communication system according to another embodiment of this application. For ease of description, it is assumed that a network device is a transmitting side, and a terminal device is a receiving side. The network device may send a downlink signal to the terminal device, and the downlink signal may be referred to as a to-be-transmitted digital signal or a source. It should be understood that the procedure of the communication system shown in FIG. 2 may also be applicable to a communication scenario in which the terminal device sends an uplink signal to the network device.

As shown in FIG. 2, the network device needs to perform source encoding to convert a source into a bit stream, perform channel encoding to encode the bit stream, modulate an encoded bit stream into a signal waveform suitable for channel transmission, and then send the signal waveform to a channel. Correspondingly, the terminal device may detect, on the channel, the downlink signal sent by the network device. After detecting the signal, the terminal device may perform demodulation, channel decoding, and source decoding on the detected signal, to restore the downlink signal, and convert the restored downlink signal into a target data format through sink decoding.

In some implementations, a polar (polar) code may be used for channel encoding and channel decoding. After implementing the channel encoding by using the polar code, the network device may adjust a quantity of bits of the encoded bit stream through rate matching, to adapt to a bearer capability of the channel. To be specific, an adjusted quantity of bits of the bit stream is consistent with a quantity of bits that can be borne by the channel. Correspondingly, the terminal device may first perform de-rate matching before the channel decoding.

For example, the network device may complete rate matching based on a rate matching interleaver. For example, an existing rate matching interleaver for a polar code is a sub-block interleaver whose length is 32, as shown in Table 5.4.1.1-1.

**Table 5.4.1.1-1 Sub-block interleaver pattern P(i)**

| i | P(i) | i | P(i) | i | P(i) | i | P(i) | i | P(i) | i | P(i) | i | P(i) | i | P(i) |
|---|---|---|---|---|---|---|---|---|---|---|---|---|---|---|---|
| 0 | 0 | 4 | 3 | 8 | 8 | 12 | 10 | 16 | 12 | 20 | 14 | 24 | 24 | 28 | 27 |
| 1 | 1 | 5 | 5 | 9 | 16 | 13 | 18 | 17 | 20 | 21 | 22 | 25 | 25 | 29 | 29 |
| 2 | 2 | 6 | 6 | 10 | 9 | 14 | 11 | 18 | 13 | 22 | 15 | 26 | 26 | 30 | 30 |
| 3 | 4 | 7 | 7 | 11 | 17 | 15 | 19 | 19 | 21 | 23 | 23 | 27 | 28 | 31 | 31 |

In this example, it is assumed that a polar code with a mother code length of W (W is a positive integer power of 2) is obtained through polar code encoding. W polar code bits are divided into 32 sub-blocks, and each sub-block may include W/32 bits. In this case, a sequence including the 32 sub-blocks may be referred to as a to-be-interleaved sequence. The network device may interleave the 32 sub-blocks based on Table 5.4.1.1-1 to obtain an interleaved sequence, so as to obtain W interleaved bit sequences. i may be understood as a sequence number of each of the 32 sub-blocks in the interleaved sequence, P(i) may be understood as a sequence number of each of the 32 sub-blocks in the to-be-interleaved sequence, and a sub-block whose sequence number is i in the interleaved sequence corresponds to a sub-block whose sequence number is P(i) in the to-be-interleaved sequence, to implement interleaving of the 32 sub-blocks. For example, a sub-block whose sequence number is 3 in the interleaved sequence corresponds to a sub-block whose sequence number is 4 in the to-be-interleaved sequence, and a sub-block whose sequence number is 4 in the interleaved sequence corresponds to a sub-block whose sequence number is 3 in the to-be-interleaved sequence.

In this embodiment of this application, P(i)={0 1 2 4 3 5 6 7 8 16 9 17 10 18 11 19 12 20 13 21 14 22 15 23 24 25 26 28 27 29 30 31} may be referred to as a sub-block interleaving sequence whose length is 32. Table 5.4.1.1-1 may be understood as the sub-block interleaver whose length is 32, i may be understood as a sequence number of an element in the sub-block interleaver, and P(i) may be understood as an element in the sub-block interleaver. For example, an element whose sequence number is 3 in the sub-block interleaver is 4.

After obtaining the W interleaved bit sequences, the network device may determine E bits based on the W bits in a puncturing (puncture), shortening, or repetition method, to complete rate matching. E is a quantity of bits after rate matching, that is, a quantity of bits that can be borne by a channel.

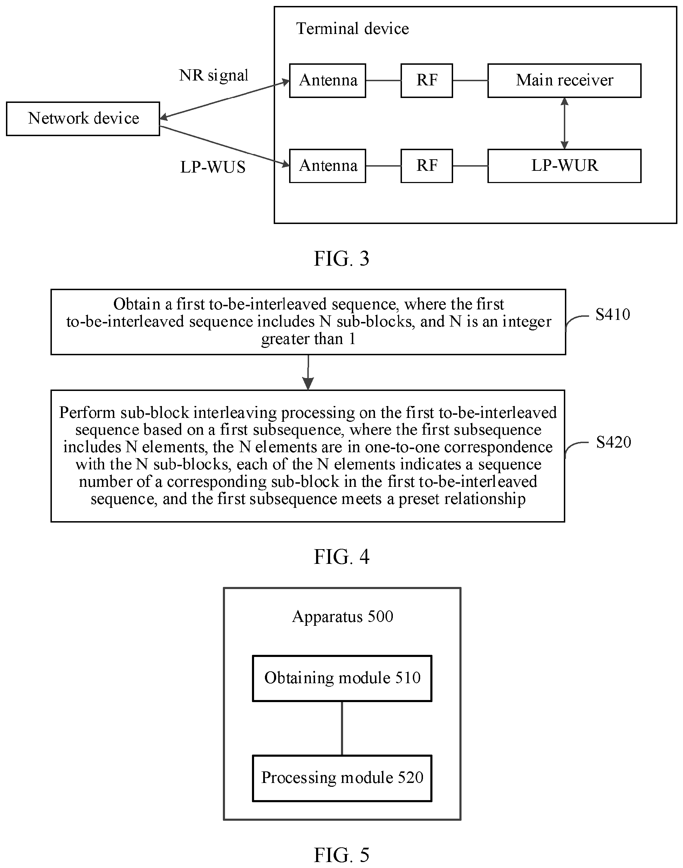

In release 18 (release 18, R18) of the 3rd generation partnership project (3rd generation partnership project, 3GPP), a low-power wake-up signal (low-power wake-up signal, LP-WUS) was introduced to support a low-latency ultra-low power consumption mechanism for terminal devices. FIG. 3 is a diagram of a working principle of a low-power wake-up signal according to an embodiment of this application. As shown in FIG. 3, a terminal device may include a main receiver (main receiver) and a low-power wake-up receiver (low-power wake-up receiver, LP-WUR). The main receiver and the LP-WUR each are configured with a separate antenna and a separate radio frequency (radio frequency, RF) unit. Downlink signals sent by a network device to the terminal device may include an NR signal and an LP-WUS. The terminal device may receive the NR signal by using the main receiver, and may monitor the LP-WUS by using the LP-WUR. Before receiving the LP-WUS, the terminal device sets the main receiver to an off state or a deep sleep state. After receiving the LP-WUS, the terminal device may wake up the main receiver to implement signal receiving, to save energy. It should be noted that the terminal device may further send an uplink signal to the network device by using the main receiver. However, after the LP-WUS is introduced, a channel coding scheme during LP-WUS transmission becomes an urgent problem to be resolved.

A person skilled in the art proposes that an NR control channel coding scheme may be reused for the LP-WUS. However, a minimum mother code length in the NR control channel coding scheme (for example, a polar code) is 32, and a length of a sub-block interleaving sequence in the NR control channel coding scheme is also 32. Therefore, interleaving of sub-blocks with a shorter mother code length cannot be supported. However, during LP-WUS transmission, a case in which a minimum mother code length in channel coding is less than 32 may occur. Therefore, how to determine a channel coding scheme for the LP-WUS based on the NR control channel coding scheme becomes an urgent technical problem to be resolved. It should be noted that the LP-WUS is introduced to meet a low-latency ultra-low power consumption mechanism of the terminal device. Therefore, a maximum quantity of payload bits (payload size), a quantity of radio network temporary identifier (radio network temporary identifier, RNTI) bits, and a quantity of cyclic redundancy check (cyclic redundancy check, CRC) bits during LP-WUS transmission are correspondingly reduced, so that the minimum mother code length in the channel coding during LP-WUS transmission may be less than 32.

In view of this, this application provides a communication method and a communication apparatus. This application provides a channel coding scheme for a data channel and a control channel that are for transmission of the LP-WUS in low power consumption scenarios. The channel coding scheme may be compatible with the NR control channel coding scheme, so that requirements of a low power consumption device for energy efficiency, coverage, and a forwarding action rule (forwarding action rule, FAR) can be met. In the technical solutions provided in this application, a same channel coding scheme may be used for the data channel and the control channel that are for transmission of the LP-WUS, and a minimum mother code length in the channel coding scheme may be less than 32. It should be understood that the technical solution provided in this application is a channel coding scheme, which may be applicable to a dedicated network device or a general-purpose device, for example, may be applicable to various terminal devices that support a low-latency ultra-low power consumption mechanism, or may be applicable to a network device.

The following describes in detail the technical solutions provided in this application with reference to the accompanying drawings.

FIG. 4 is a schematic flowchart of a communication method according to an embodiment of this application. As shown in FIG. 4, the method may include S410 and S420.

For example, the method may be performed by a network device, or may be performed by a chip system, a hardware circuit, and/or a software module used in the network device.

S410: Obtain a first to-be-interleaved sequence, where the first to-be-interleaved sequence includes N sub-blocks, and N is an integer greater than 1.

In this embodiment, when sending an LP-WUS to a terminal device, the network device may perform source encoding, channel encoding, rate matching, and modulation on the LP-WUS, and then send the LP-WUS to a channel. Correspondingly, the terminal device may detect the LP-WUS on the channel.

For example, after encoding the LP-WUS according to a polar code-based channel coding scheme, the network device may perform rate matching in a rate matching manner that is based on sub-block interleaving. The rate matching manner based on sub-block interleaving includes puncturing, shortening, or repetition. For example, when an encoded LP-WUS is a polar code with a mother code length of Z (Z is a positive integer power of 2). The network device may divide Z polar code bits into the N sub-blocks, and each sub-block may include Z/N bits. In this case, a sequence including the N sub-blocks may be referred to as the first to-be-interleaved sequence. N is an integer greater than 1. For example, N may be an integer greater than 1 and less than 32.

S420: Perform sub-block interleaving processing on the first to-be-interleaved sequence based on a first subsequence, where the first subsequence includes N elements, the N elements are in one-to-one correspondence with the N sub-blocks, each of the N elements indicates a sequence number of a corresponding sub-block in the first to-be-interleaved sequence, and the first subsequence meets a preset relationship.

For example, after determining the first to-be-interleaved sequence, the network device may perform sub-block interleaving processing on the first to-be-interleaved sequence based on the first subsequence to obtain a first interleaved sequence, so as to obtain Z interleaved bit sequences. After obtaining the Z interleaved bit sequences, the network device may implement rate matching in a puncturing, shortening, or repetition method. The first interleaved sequence includes the N sub-blocks, and a sub-block whose sequence number is j in the first interleaved sequence may correspond to a sub-block whose sequence number is S(j) in the first to-be-interleaved sequence, to implement interleaving of the N sub-blocks. It should be understood that a first subsequence S(j) may include N elements, the N elements may be in one-to-one correspondence with the N sub-blocks, and each of the N elements may indicate a sequence number of a corresponding sub-block in the first to-be-interleaved sequence. In this embodiment of this application, S(j) may be referred to as the first subsequence, or a sub-block interleaving sequence whose length is N, and the first subsequence meets the preset relationship. The preset relationship may be set based on an actual requirement. This is not specifically limited in this application.

In some possible implementations, that the first subsequence meets the preset relationship may be understood as that the N elements in the first subsequence meet the preset relationship. For example, the first subsequence may be any one of the following sequences: {0 1 2 3 4 8 5 9 6 10 7 11 12 13 14 15}, {0 1 2 4 3 5 6 7 8 9 10 11 12 13 14 15}, {0 1 2 3 4 5 6 7 8 9 10 12 11 13 14 15}, {0 3 2 1 4 5 8 7 6 9 10 11 15 13 14 12}, or {0 3 2 1 4 5 8 7 6}.

This embodiment of this application provides a channel coding scheme in low power consumption scenarios, so that the network device can perform transmission of the LP-WUS based on the channel coding scheme, thereby implementing channel coding in the low power consumption scenarios. It should be understood that the LP-WUS is merely an example of a signal transmitted in the low power consumption scenarios. This embodiment may be further applied to other low power consumption scenarios. This is not specifically limited in this application.

In a possible implementation, the first subsequence and a first sequence may meet the preset relationship, where the first sequence may be a known sequence. In this implementation, the network device may generate, in a nested manner based on a given sub-block interleaving sequence, a sub-block interleaving sequence (for example, the first subsequence) with a short mother code length. It should be understood that the network device may perform sub-block interleaving processing on a second to-be-interleaved sequence based on the first sequence, to obtain a second interleaved sequence. The first sequence may include M elements, the M elements are in one-to-one correspondence with M sub-blocks included in the second to-be-interleaved sequence, and each of the M elements indicates a sequence number of a corresponding sub-block in the second to-be-interleaved sequence.

In this implementation, when N is less than or equal to a length M of the first sequence, the first subsequence may be extracted from the first sequence. The length of the first sequence may be understood as a quantity of elements included in the first sequence, and the first sequence may be referred to as a mother-sub-block interleaving sequence of the first subsequence.

In a first example, the first subsequence S(j) may include an element less than N in a first sequence Q(i). In other words, N elements whose element values are less than N may be extracted from the first sequence Q(i) in a natural order, to form the first subsequence S(j). For example, {S(j)=Q(i)<N, i=0, 1, ..., M-1, j=0, 1, ..., N-1}.

In this example, if the first sequence Q(i) is a sub-block interleaving sequence P(i) shown in Table 5.4.1.1-1, and N=16, the first subsequence S(j) may be extracted from the sub-block interleaving sequence P(i) in Table 5.4.1.1-1 in the following manner: {S(j)=P(i)<16, i=0, 1, ..., 31, j=0, 1, ..., 15}. For example, the first subsequence S(j)={0 1 2 4 3 5 6 7 8 9 10 11 12 13 14 15} or the first subsequence S(j) may be shown in Table 1.

**Table 1 Sub-block interleaver pattern S(j)**

| j | S(j) | j | S(j) | j | S(j) | j | S(j) |
|---|---|---|---|---|---|---|---|
| 0 | 0 | 4 | **3** | 8 | 8 | 12 | 12 |
| 1 | 1 | 5 | 5 | 9 | 9 | 13 | 13 |
| 2 | 2 | 6 | 6 | 10 | 10 | 14 | 14 |
| 3 | **4** | 7 | 7 | 11 | 11 | 15 | 15 |

It should be understood that j may be understood as a sequence number of each of the 16 sub-blocks in the first interleaved sequence, S(j) may be understood as a sequence number of each of the 16 sub-blocks in the first to-be-interleaved sequence, a sub-block whose sequence number is j in the first interleaved sequence corresponds to a sub-block whose sequence number is S(j) in the first to-be-interleaved sequence, to implement interleaving of the 16 sub-blocks. For example, a sub-block whose sequence number is 3 in the first interleaved sequence corresponds to a sub-block whose sequence number is 4 in the first to-be-interleaved sequence, and a sub-block whose sequence number is 4 in the first interleaved sequence corresponds to a sub-block whose sequence number is 3 in the first to-be-interleaved sequence.

In this embodiment, S(j)={0 1 2 4 3 5 6 7 8 9 10 11 12 13 14 15} may be referred to as a sub-block interleaving sequence whose length is 16, Table 1 may be understood as a sub-block interleaver whose length is 16, j may be understood as a sequence number of an element in the sub-block interleaver, and S(j) may be understood as an element in the sub-block interleaver. For example, an element whose sequence number is 3 in the sub-block interleaver is 4.

A manner of extracting the first subsequence in the method is simple, and in the first subsequence extracted in the method, only positions of a 4^{th} sub-block (that is, the sub-block whose sequence number is 3 in the first interleaved sequence) and a 5^{th} sub-block (that is, the sub-block whose sequence number is 4 in the first interleaved sequence) are changed. Therefore, when the network device performs sub-block interleaving processing on the first to-be-interleaved sequence based on the first subsequence determined in the method, a sub-block interleaving order may be closer to a natural order.

In a second example, the first subsequence S(j) may include an element less than N in a second subsequence S₂(j₂), and the second subsequence S₂(j₂) may be a sequence including a difference between each of elements greater than or equal to N in a first sequence Q(i) and N. For example, the second subsequence S₂(j₂) may be extracted from the first sequence Q(i) in the following manner: {S₂(j₂)=(Q(i)≥N)-N, i=0, 1, ..., M-1, j₂=0, 1, ..., M-N+1}, and the first subsequence S(j) may be extracted from the second subsequence S₂(j₂) in the following manner: {S(j)=S₂(j₂)<N, j₂=0, 1, ..., M-N+1, j=0, 1, ..., N-1}. The element greater than or equal to N in the first sequence Q(i) may be understood as an element whose element value is greater than or equal to N in the first sequence Q(i).

In this example, if the first sequence Q(i) is a sub-block interleaving sequence P(i) shown in Table 5.4.1.1-1, and N=16, elements greater than or equal to 16 in the sub-block interleaving sequence P(i) are {16 17 18 19 20 21 22 23 24 25 26 28 27 29 30 31}, and the second subsequence S₂(j₂) is a sequence including differences between elements greater than or equal to 16 extracted from the sub-block interleaving sequence P(i) and N=16, and S₂(j₂)={0 1 2 3 4 5 6 7 8 9 10 12 11 13 14 15}. In this case, the first subsequence S(j) is elements less than N=16 in the second subsequence S₂(j₂), where S(j)={0 1 2 3 4 5 6 7 8 9 10 12 11 13 14 15}.

In a third example, the first subsequence S(j) may include an element less than N in a third subsequence S₃(j₃), the third subsequence S₃(j₃) may be a sequence including a quotient of an element that is in a first sequence Q(i) and for which a remainder of division by a first ratio is R and the first ratio, the first ratio is a quotient of M divided by N, and R may include a non-negative integer less than the first ratio. The element less than N in the third subsequence S₃(j₃) may be understood as an element whose element value is less than N in the third subsequence S₃(j₃).

In this example, the first ratio u may be $u = \left⌊M/N\right⌋$, where 1≤u≤M, and the symbol 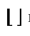 may be understood as rounding down, that is, u may be understood as the quotient of M divided by N. It should be understood that 0≤R<u. For example, when u is 2, R may be 0 or 1. In some implementations, the first ratio u may alternatively be $u = \left⌈M/N\right⌉$, where 2≤u≤M, and the symbol 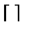 may be understood as rounding up. This is not limited in this application. The following uses $u = \left⌊M/N\right⌋$ as an example to describe content in this example.

For example, elements that are in the first sequence Q(i) and for which remainders of division by the first ratio u are equal to R may be sequentially extracted, and a sequence including values obtained by rounding down each extracted element divided by the first ratio u is used as the third subsequence S₃(j₃), that is, a sequence including quotients obtained by dividing all the extracted elements by the first ratio u is used as the third subsequence S₃(j₃). It should be understood that dividing each extracted element by the first ratio u is to reduce a value range of the extracted element to a value range from 0 to N. The first subsequence S(j) may include the element less than N in the third subsequence S₃(j₃). It should be noted that, if rounding down is performed during calculation of the first ratio u, rounding down also needs to be performed during determining of the third subsequence S₃(j₃). Correspondingly, if rounding up is performed during calculation of the first ratio u, rounding up also needs to be performed during determining of the third subsequence S₃(j₃). If a quantity of the elements that are in the first sequence Q(i) and for which remainders of division by the first ratio u are equal to R is less than N, elements that are in the first sequence Q(i) and for which remainders of division by the first ratio u are equal to R±1 may continue to be extracted, until a quantity of extracted elements is equal to N.

In this example, if the first sequence Q(i) is the sub-block interleaving sequence P(i) shown in Table 5.4.1.1-1, and when N=16, the first ratio u=32/16=2, R may be 0 or 1. It is assumed that when R=0, elements that are in the sub-block interleaving sequence P(i) and for which remainders of division by the first ratio u=2 are equal to 0 are elements whose element values are even numbers in the sub-block interleaving sequence P(i), that is, {0 2 4 6 8 16 10 18 12 20 14 22 24 26 28 30}, and a sequence including values obtained by rounding down each extracted element divided by the first ratio u=2 is used as the third subsequence S₃(j₃), that is, S₃(j₃)={0 1 2 3 4 8 5 9 6 10 7 11 12 13 14 15}. In this case, the first subsequence S(j) are elements less than N in the third subsequence S₃(j₃), where S(j)={0 1 2 3 4 8 5 9 6 10 7 11 12 13 14 15}. For example, the first subsequence S(j) may be shown in Table 2.

**Table 2 Sub-block interleaver pattern S(j)**

| j | S(j) | j | S(j) | j | S(j) | j | S(j) |
|---|---|---|---|---|---|---|---|
| 0 | 0 | 4 | 4 | 8 | **6** | 12 | 12 |
| 1 | 1 | 5 | **8** | 9 | **10** | 13 | 13 |
| 2 | 2 | 6 | **5** | 10 | **7** | 14 | 14 |
| 3 | 3 | 7 | **9** | 11 | 11 | 15 | 15 |

It should be understood that, when N=16, the first subsequence S(j) may be extracted from the first sequence Q(i) based on parity of elements in the first sequence Q(i).

In this embodiment, S(j)={0 1 2 3 4 8 5 9 6 10 7 11 12 13 14 15} may be referred to as a sub-block interleaving sequence whose length is 16, Table 2 may be understood as a sub-block interleaver whose length is 16, j may be understood as a sequence number of an element in the sub-block interleaver, and S(j) may be understood as an element in the sub-block interleaver. For example, an element whose sequence number is 5 in the sub-block interleaver is 8.

In this example, in comparison with the rate matching manner of puncturing or shortening performed based on the first subsequence shown in Table 1, when the network device uses the rate matching manner of puncturing or shortening based on the first subsequence shown in Table 2, positions of puncturing or shortening are distributed more evenly, causing better performance of a polar code after rate matching. In the first subsequence shown in Table 1, only the positions of the 4^{th} sub-block and the 5^{th} sub-block in the first interleaved sequence are changed.

In a fourth example, the first subsequence S(j) may include an element less than N in a fourth subsequence S₄(j₄), and the fourth subsequence S₄(j₄) may be a sequence including a quotient of each element in a first sequence Q(i) and a first ratio. The element less than N in the fourth subsequence S₄(j₄) may be understood as an element whose element value is less than N in the fourth subsequence S₄(j₄).

In this example, the first ratio u may be $u = \left⌊M/N\right⌋$, where 1≤u≤M, that is, u may be understood as a quotient of M divided by N.

For example, quotients obtained by dividing all the elements in the first sequence Q(i) by the first ratio u may be sequentially calculated, a sequence including the calculated quotients is used as the fourth subsequence S₄(j₄). Only a quotient that appears for the first time may be included in the fourth subsequence S₄(j₄). If a quotient obtained by dividing Q(i) by the first ratio u appears repeatedly, the quotient that appears repeatedly is skipped until calculation is completed. The first subsequence S(j) includes the element less than N in the fourth subsequence S₄(j₄). In some embodiments, when the quotients obtained by dividing all the elements in the first sequence Q(i) by the first ratio u are calculated, quotients that appear for the first time may be sequentially included in the fourth subsequence S₄(j₄) until a length of the fourth subsequence S₄(j₄) is N. In this case, the fourth subsequence S₄(j₄) may be considered as the first subsequence S(j).

In this example, if the first sequence Q(i) is the sub-block interleaving sequence P(i) shown in Table 5.4.1.1-1, and when N=16, the first ratio u=32/16=2, the first subsequence S(j)={0 1 2 3 4 8 5 9 6 10 7 11 12 13 14 15}. It can be learned that the first subsequence S(j) determined in this example is consistent with the first subsequence S(j) shown in Table 2.

In this example, if the first sequence Q(i) is the sub-block interleaving sequence P(i) shown in Table 5.4.1.1-1, and N=16, the first ratio u=32/16=2. In some implementations, pseudocode of the first subsequence may be generated based on the sub-block interleaving sequence P(i) shown in Table 5.4.1.1-1, to determine the first subsequence. A specific implementation of generating the pseudocode of the first subsequence is not limited in this application.

In this example, in comparison with the rate matching manner of puncturing or shortening performed based on the first subsequence shown in Table 1, when the network device uses the rate matching manner of puncturing or shortening based on the first subsequence determined in this example, positions of puncturing or shortening are distributed more randomly, causing a better interleaving effect.

In a fifth example, the first subsequence S(j) may include an element less than N in a fifth subsequence S₅(j₅), the fifth subsequence S₅(j₅) may be a sequence including quotients of a plurality of elements included in a first sequence Q(i) and 2, the plurality of elements may be in one-to-one correspondence with a plurality of sub-blocks, each of the plurality of elements indicates a sequence number of a corresponding sub-block in the second to-be-interleaved sequence, a sequence number of each of the plurality of sub-blocks in an interleaved sequence is an odd number or an even number, and the interleaved sequence is obtained by performing sub-block interleaving processing on the second to-be-interleaved sequence by the first sequence. The interleaved sequence in this example is the second interleaved sequence.

In this example, the network device may determine a plurality of sub-blocks whose sequence numbers j₅ are odd numbers or even numbers in the second interleaved sequence, extract a plurality of elements corresponding to the plurality of sub-blocks from S₅(j₅), divide each of the plurality of extracted elements by 2, and then perform rounding down or rounding up, to obtain the fifth subsequence S₅(j₅). It should be noted that, in this embodiment, only a value that appears for the first time and that is obtained by dividing each of the plurality of elements by 2 and rounding down may be included in the fifth subsequence S₅(j₅). If a value obtained by dividing each of the plurality of elements by 2 and rounding down appears repeatedly, the value that appears repeatedly is skipped, that is, the value that appears repeatedly is not included in the fifth subsequence S₅(j₅). That the fifth subsequence S₅(j₅) is obtained by dividing each of the plurality of elements by 2 and rounding down may be understood as that a sequence including a quotient obtained by dividing each of the plurality of elements by 2 is used as the fifth subsequence S₅(j₅). The first subsequence S(j) may include the element less than N in the fifth subsequence S₅(j₅), and the element less than N in the fifth subsequence S₅(j₅) may be understood as an element whose element value is less than N in the fifth subsequence S₅(j₅).

In this example, if the first sequence Q(i) is a sub-block interleaving sequence P(i) shown in Table 5.4.1.1-1, and N=9, P(i) corresponding to i being an even number or an odd number in Table 5.4.1.1-1 may be extracted. For example, a sequence obtained by extracting P(i) corresponding to i being an even number in Table 5.4.1.1-1 is {0 6 4 2 8 10 16 14 12 18 20 22 30 26 28 24}. In addition, the fifth subsequence S₅(j₅) is obtained by dividing each element in the extracted sequence by 2 and rounding down, where S₅(j₅)-{0 3 2 1 4 5 8 7 6 9 10 11 15 13 14 12}. The first subsequence S(j) includes elements less than N=9 in the fifth subsequence S₅(j₅), and S(j)={0 3 2 14587 6}.

In this example, the first subsequence may be extracted from the first sequence based on parity of a sequence number of each of the M sub-blocks in the second interleaved sequence. The network device may obtain better error correction performance when performing rate matching based on the first subsequence determined in the method. If the first sequence is referred to as the mother-sub-block interleaving sequence of the first subsequence, a nesting feature for the first sequence and the first subsequence is a sequence number nesting manner.

In a sixth example, if a first sequence Q(i) is a sub-block interleaving sequence P(i) shown in Table 5.4.1.1-1, and N=16, the first subsequence S(j) may be determined in the following manner.

For example, step 1: Convert the sub-block interleaving sequence P(i) into the following binary representation form, for example, P(i)=[b0 b1 b2 b3 b4], where the 1^{st} bit b0 in a left-to-right order may be a least significant bit (least significant bit, LSB), and the last bit b4 in the left-to-right order, namely, the rightmost bit b4 may be a most significant bit (most significant bit, MSB). In this case, P(i) may be:

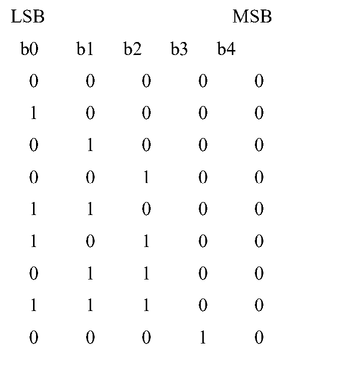

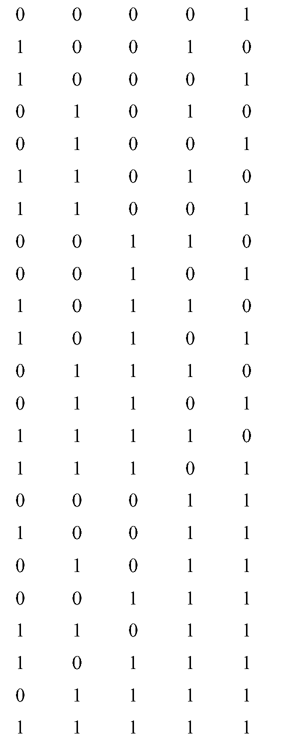

Step 2: Extract a binary sequence with LSB=0 from the binary sequence in step 1 (it can be learned that, when the LSB is 0, corresponding elements are P(i) corresponding to i being {0 2 3 6 8 9 12 13 16 17 20 21 24 26 27 30} in Table 5.4.1.1-1), and reserve only 4 bits by removing the LSB (b0), for example, [b1 b2 b3 b4], to obtain 16 new binary sequences, as shown in the following:

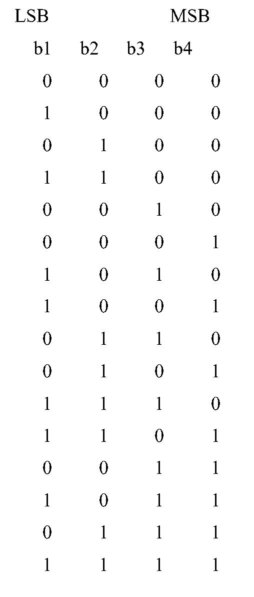

Step 3: Convert the 16 4-bit binary numbers determined in step 2 into decimal numbers, to obtain a sub-block interleaving sequence whose length is 16, that is, the first subsequence S(j). The first subsequence S(j)={0 1 2 3 4 8 5 9 6 10 7 11 12 13 14 15}. It can be learned that the first subsequence determined in this example is the same as the first subsequence determined in the third example and the fourth example.

In some implementations, a binary sequence with LSB=1, b1=0, b1=1, b2=0, or b2=1 may alternatively be extracted from the binary sequence in step 1, and only four bits by removing the LSB, b1, or b2 are reserved, to obtain 16 new binary sequences, so as to obtain a sub-block interleaving sequence whose length is 16, that is, the first subsequence S(j). The first subsequence S(j)={0 1 2 3 4 8 5 9 6 10 7 11 12 13 14 15}.

In this example, a sub-block interleaver S(j) whose length N is less than 32 may be generated based on an NR sub-block interleaver P(i) whose length is 32, 32 decimal numbers are converted into 32 binary sequences each with log₂(32)=5 bits, and 16 binary numbers with LSB=0, LSB=1, b1=0, b1=1, b2=0, or b2=1 are extracted, to form a final sub-block interleaving sequence S(j) whose length is 16. In this example, a manner of extracting the first subsequence is simple, so that when the network device performs sub-block interleaving processing on the first to-be-interleaved sequence based on the first subsequence determined in this example, a sub-block interleaving order better conforms to a polarization feature, and higher polarization efficiency can be achieved after rate matching.

In a seventh example, if a first sequence Q(i) is a sub-block interleaving sequence P(i) shown in Table 5.4.1.1-1, and N=16, the first subsequence S(j) may be determined in the following manner.

For example, step 1: Convert the sub-block interleaving sequence P(i) into the following binary representation form, for example, P(i)=[b0 b1 b2 b3 b4], where the 1^{st} bit b0 in a left-to-right order may be an LSB, and the last bit b4 in the left-to-right order, namely, the rightmost bit b4 may be an MSB. In this case, P(i) may be the binary sequence whose length is 32 shown in step 1 in the sixth example. Details are not described herein again.

Step 2: Extract a binary sequence with MSB=0 from the binary sequence in step 1 (it can be learned that, when the MSB is 0, corresponding elements are P(i) corresponding to i being {0 1 2 3 4 5 6 7 8 10 12 14 16 18 20 22} in Table 5.4.1.1-1), and reserve only 4 bits by removing the MSB, for example, [b0 b1 b2 b3], to obtain 16 new binary sequences, as shown in the following:

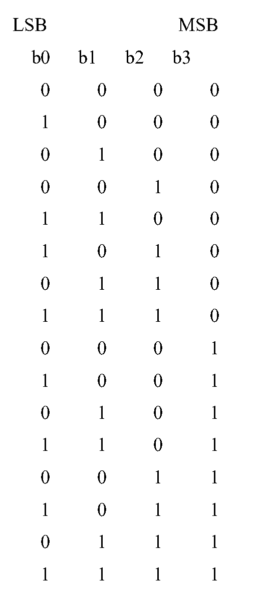

Step 3: Convert the 16 4-bit binary numbers determined in step 2 into decimal numbers, to obtain a sub-block interleaving sequence whose length is 16, that is, the first subsequence S(j). The first subsequence S(j)={0 1 2 4 3 5 6 7 8 9 10 11 12 13 14 15}. It can be learned that the first subsequence determined in this example is the same as the first subsequence determined in the first example.

In some implementations, a binary sequence with second MSB (b3)=0 may alternatively be extracted from the binary sequence in step 1, and only four bits by removing b3 are reserved, to obtain 16 new binary sequences, so as to obtain a sub-block interleaving sequence whose length is 16, that is, the first subsequence S(j). The first subsequence S(j)={0 1 2 4 3 5 6 7 8 9 10 11 12 13 14 15}.

In some implementations, a binary sequence with MSB=1 or second MSB (b3)=1 may alternatively be extracted from the binary sequence in step 1, and only four bits by removing the MSB or b3 are reserved, to obtain 16 new binary sequences, so as to obtain a sub-block interleaving sequence whose length is 16, that is, the first subsequence S(j). The first subsequence S(j)={0 1 2 3 4 5 6 7 8 9 10 12 11 13 14 15}. It can be learned that the first subsequence determined in this method is the same as the first subsequence determined in the second example.

In this example, a sub-block interleaver S(j) whose length N is less than 32 may be generated based on an NR sub-block interleaver P(i) whose length is 32, 32 decimal numbers are converted into 32 binary sequences each with log₂(32)=5 bits, and 16 binary numbers with MSB=1, MSB=0, b3=1, or b3=0 are extracted, to form a final sub-block interleaving sequence S(j) whose length is 16. In this example, a manner of extracting the first subsequence is simple, and when the network device performs sub-block interleaving processing on the first to-be-interleaved sequence based on the first subsequence determined in this method, a sub-block interleaving order better conforms to a natural order.

In a possible implementation, the first subsequence meets the preset relationship, and the first subsequence may be {0 1 2 4 3 5 6 7 8 16 9 17 10 18 11 19 12 20 13 21 14 22 15 23 24 25 26 28 27 29 30 31 32 33 34 36 35 37 38 39 40 48 41 49 42 50 43 51 44 52 45 53 46 54 47 55 56 57 58 60 59 61 62 63}, or the first subsequence may be {0 2 4 8 6 10 12 14 16 32 18 34 20 36 22 38 24 40 26 42 28 44 30 46 48 50 52 56 54 58 60 62 1 3 5 9 7 11 13 15 17 33 19 35 21 37 23 39 25 41 27 43 29 45 31 47 49 51 53 57 55 59 61 63}.

For example, that the first subsequence meets the preset relationship may include: An (i+A)^{th} element and an i^{th} element in the first subsequence meet the preset relationship, a length of the first subsequence is N, where N=2×A, A is an integer greater than 1, and i is a positive integer less than or equal to A. Therefore, if the first A elements in the first subsequence are determined, an (A+1)^{th} element to a (2A)^{th} element in the first subsequence may be determined based on the first A elements.

In an example, that the (i+A)^{th} element and the i^{th} element in the first subsequence meet the preset relationship may include: The (i+A)^{th} element in the first subsequence is equal to a sum of the i^{th} element and A.

For example, a j^{th} element in the first subsequence may be equal to a j^{th} element in the first sequence, and j is a positive integer less than or equal to A. The first sequence may be a known sequence. The network device may perform sub-block interleaving processing on the second to-be-interleaved sequence based on the first sequence, to obtain the second interleaved sequence. The first sequence may include M elements, the M elements are in one-to-one correspondence with the M sub-blocks included in the second to-be-interleaved sequence, and each of the M elements indicates a sequence number of a corresponding sub-block in the second to-be-interleaved sequence.

For example, A may be a positive integer multiple of M. For example, when A=M, the first A elements in the first subsequence may include the M elements in the first sequence. For another example, when A=X×M, and X is an integer greater than 1, the first M elements in the first subsequence may include the M elements in the first sequence. In an (M+1)^{th} element to a (2M)^{th} element in the first subsequence, a (c+M)^{th} element may be a sum of a c^{th} element and M, so that the first 2M elements in the first subsequence can be determined, and then the first A elements in the first subsequence can be determined, where c is a positive integer less than or equal to M.

For example, if A=64, M=32, the first sequence is the sub-block interleaving sequence P(i) shown in Table 5.4.1.1-1, and P(i)={0 1 2 4 3 5 6 7 8 16 9 17 10 18 11 19 12 20 13 21 14 22 15 23 24 25 26 28 27 29 30 31}, the first 32 elements S₁(j) in the first subsequence S(j) are {0 1 2 4 3 5 6 7 8 16 9 17 10 18 11 19 12 20 13 21 14 22 15 23 24 25 26 28 27 29 30 31}, and a 33^{rd} element to a 64^{th} element in S₂(j) in S(j) are {32 33 34 36 35 37 38 39 40 48 41 49 42 50 43 51 44 52 45 53 46 54 47 55 56 57 58 60 59 61 62 63}. Therefore, S(j)={0 1 2 4 3 5 6 7 8 16 9 17 10 18 11 19 12 20 13 21 14 22 15 23 24 25 26 28 27 29 30 31 32 33 34 36 35 37 38 39 40 48 4149 42 50 43 51 44 52 45 53 46 54 47 55 56 57 58 60 59 61 62 63}.

In another example, that the (i+A)^{th} element and the i^{th} element in the first subsequence meet the preset relationship may include: The (i+A)^{th} element in the first subsequence is equal to a sum of the i^{th} element and 1.

For example, a j^{th} element in the first subsequence may be equal to T times a j^{th} element in the first sequence, T is a ratio of N to M, and M may be a length of the first sequence. The first sequence may be a known sequence. The network device may perform sub-block interleaving processing on the second to-be-interleaved sequence based on the first sequence, to obtain the second interleaved sequence. The first sequence may include M elements, the M elements are in one-to-one correspondence with the M sub-blocks included in the second to-be-interleaved sequence, and each of the M elements indicates a sequence number of a corresponding sub-block in the second to-be-interleaved sequence.

For example, A may be a positive integer multiple of M. For example, when A=M, T=2, and the first A elements in the first subsequence may include a value obtained by multiplying each of the M elements in the first sequence by 2. For example, when the first sequence is {0 1}, the first A elements in the first subsequence may be {0 2}. For another example, when A=X×M, and X is an integer greater than 1, T=2×X, and the first M elements in the first subsequence may be values obtained by multiplying the M elements in the first sequence by 2×X. In an (M+1)^{th} element to a (2M)^{th} element in the first subsequence, a (c+M)^{th} element may be a sum of a c^{th} element and 1, so that the first 2M elements in the first subsequence can be determined, and then the first A elements in the first subsequence can be determined, where c is a positive integer less than or equal to M.

For example, if A=64, M=32, the first sequence is the sub-block interleaving sequence P(i) shown in Table 5.4.1.1-1, P(i)={0 1 2 4 3 5 6 7 8 16 9 17 10 18 11 19 12 20 13 21 14 22 15 23 24 25 26 28 27 29 30 31}, and T=2, the first 32 elements S₁(j) in the first subsequence S(j) are {0 2 4 8 6 10 12 14 16 32 18 34 20 36 22 38 24 40 26 42 28 44 30 46 48 50 52 56 54 58 60 62}, and a 33^{rd} element to a 64^{th} element in S₂(j) in S(j) are {1 3 5 9 7 11 13 15 17 33 19 35 21 37 23 39 25 41 27 43 29 45 31 47 49 51 53 57 55 59 61 63}. Therefore, S(j)={0 2 4 8 6 10 12 14 16 32 18 34 20 36 22 38 24 40 26 42 28 44 30 46 48 50 52 56 54 58 60 62 1 3 5 9 7 11 13 15 17 33 19 35 21 37 23 39 25 41 27 43 29 45 31 47 49 51 53 57 55 59 61 63}.

In this implementation, it can be learned that, when N is greater than the length M of the first sequence, the first subsequence may be generated by extending the first sequence. It should be understood that, in one aspect, the first subsequence may be obtained by extending the first sequence. Therefore, the first sequence may be referred to as a mother-sub-block interleaving sequence of the first subsequence. In another aspect, the length of the first subsequence is greater than the length of the first sequence, and the first sequence may be extracted from the first subsequence based on the methods provided in the first example to the seventh example. Therefore, the first subsequence may also be referred to as a mother-sub-block interleaving sequence of the first sequence. A relationship between the first subsequence and the first sequence is not specifically limited in this application.

In a possible implementation, if the first sequence is the sub-block interleaving sequence P(i) shown in Table 5.4.1.1-1, and N=64, the first subsequence S(j) may be determined in the following manner.

For example, step 1: Convert the sub-block interleaving sequence P(i) into the following binary representation form, for example, P(i)=[b0 b1 b2 b3 b4], where the 1^{st} bit b0 in a left-to-right order may be an LSB, and the last bit b4 in the left-to-right order, namely, the rightmost bit b4 may be an MSB. In this case, P(i) may be the binary sequence whose length is 32 shown in step 1 in the sixth example. Details are not described herein again.

Step 2: Perform bit flipping on the binary sequence in step 1 from back to front (from a 16^{th} one to a 1^{st} one) in sequence, and cascade a binary sequence after flipping to a 33^{rd} position to a 64^{th} position in the binary sequence, as shown in the following bold parts:

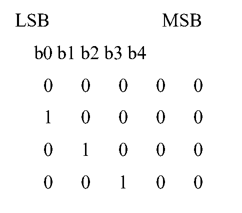

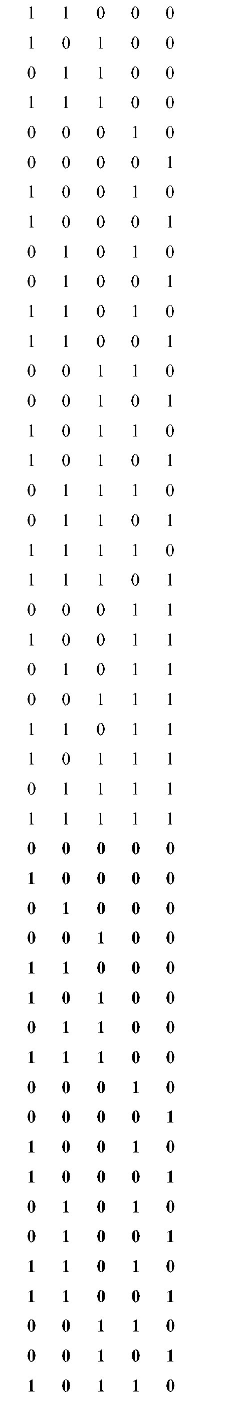

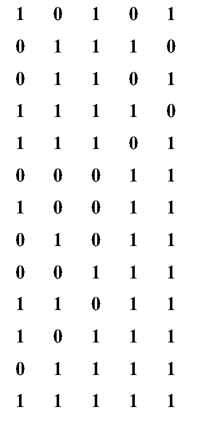

{1 1 1 1 1} may be {0 0 0 0 0} after bit flipping. It can be learned that a 17^{th} binary bit is obtained by performing bit flipping on a 16^{th} binary bit, and by analogy, a 32^{nd} binary bit is obtained by performing bit flipping on a 1^{st} binary bit.

Step 3: Add a new bit to the right side of the MSB (for example, b4) of the binary sequence with 64 rows obtained in step 2, and use the added bit as a new MSB. In the binary sequence with 64 rows, new MSBs in the first 32 binary bits may be 0, and new MSBs in the last 32 binary bits may be 1. As shown below, the new MSB is b5.

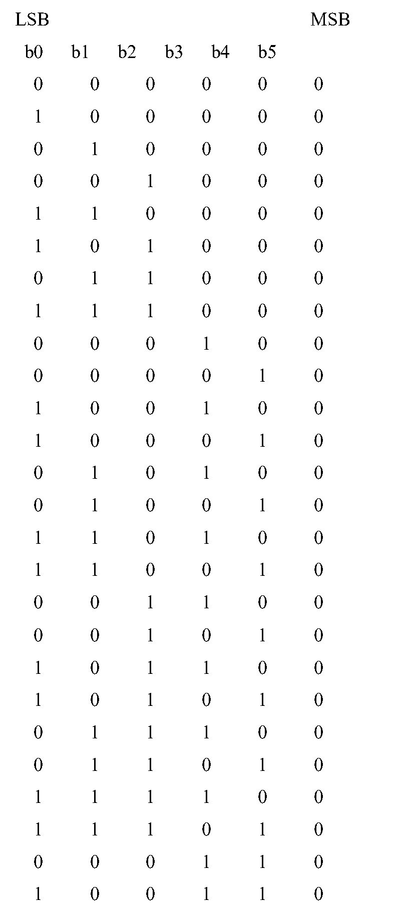

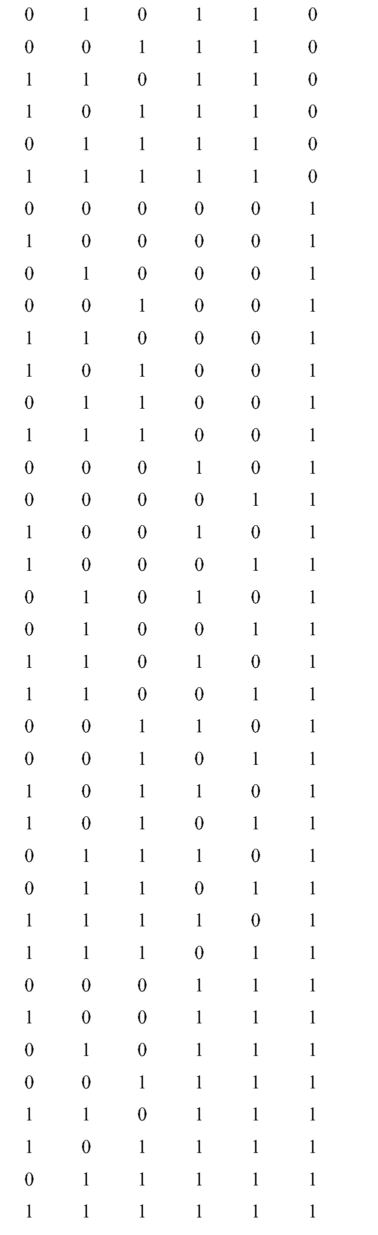

Step 4: Convert the 64 6-bit binary numbers determined in step 3 into decimal numbers, to obtain a sub-block interleaving sequence whose length is 64, that is, the first subsequence S(j). The first subsequence S(j)={0 1 2 4 3 5 6 7 8 16 9 17 10 18 11 19 12 20 13 21 14 22 15 23 24 25 26 28 27 29 30 31 32 33 34 36 35 37 38 39 40 48 41 49 42 50 43 51 44 52 45 53 46 54 47 55 56 57 58 60 59 61 62 63}.

In a possible implementation, if the first sequence is the sub-block interleaving sequence P(i) shown in Table 5.4.1.1-1, and N=64, the first subsequence S(j) may be determined in the following manner.

In this implementation, step 1: Convert the sub-block interleaving sequence P(i) into the following binary representation form, for example, P(i)=[b0 b1 b2 b3 b4], where the 1^{st} bit b0 in a left-to-right order may be an LSB, and the last bit b4 in the left-to-right order, namely, the rightmost bit b4 may be an MSB.

Step 2: Perform bit flipping on the binary sequence in step 1 from back to front (from a 16^{th} one to a 1^{st} one) in sequence, and cascade a binary sequence after flipping to a 33^{rd} position to a 64^{th} position in the binary sequence.

For specific implementation processes of step 1 and step 2 in this implementation, refer to step 1 and step 2 in the foregoing possible implementation. Details are not described herein again.

Step 3: Add a new bit to the left side of the MSB (for example, b4) of the binary sequence with 64 rows obtained in step 2, and use the added bit as a new LSB. In the binary sequence with 64 rows, new LSBs in the first 32 binary bits may be 0, and new LSBs in the last 32 binary bits may be 1. As shown below, the new MSB is a new b0.

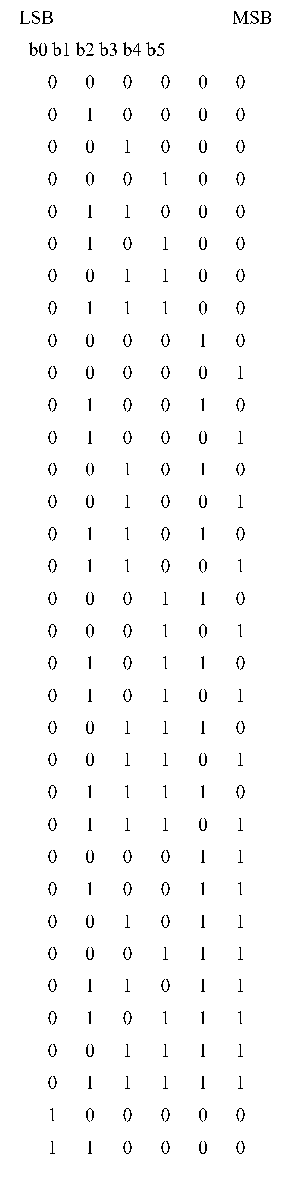

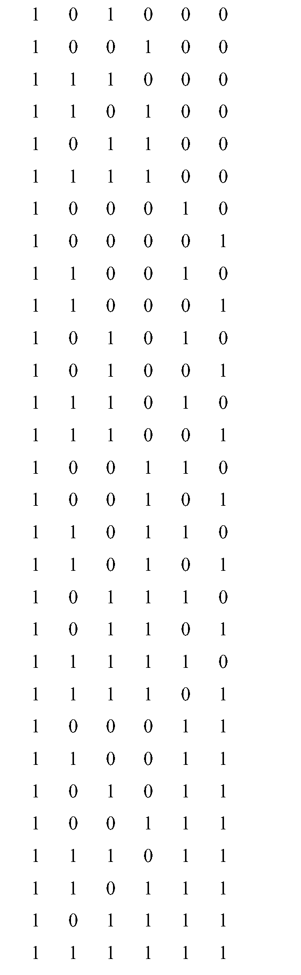

Step 4: Convert the 64 6-bit binary numbers determined in step 3 into decimal numbers, to obtain a sub-block interleaving sequence whose length is 64, that is, the first subsequence S(j). The first subsequence S(j)={0 2 4 8 6 10 12 14 16 32 18 34 20 36 22 38 24 40 26 42 28 44 30 46 48 50 52 56 54 58 60 62 1 3 5 9 7 11 13 15 17 33 19 35 21 37 23 39 25 41 27 43 29 45 31 47 49 51 53 57 55 59 61 63}.

In this embodiment of this application, the network device may perform sub-block interleaving on the first to-be-interleaved sequence based on the first subsequence, and perform rate matching based on a bit sequence after sub-block interleaving. In some implementations, there may also be a sub-block interleaving sequence in a 6G communication system, for example, the first subsequence determined in this embodiment of this application. However, the sub-block interleaving sequence may not be limited to use before rate matching. For example, the sub-block interleaving sequence may be applicable to a scenario like hybrid automatic repeat request (hybrid automatic repeat request, HARQ) sending. For example, before the HARQ is sent, polar code encoding may be first performed on the HARQ, and a polar code, obtained through encoding, with a mother code length of Y (Y is a positive integer power of 2) is divided into B sub-blocks. In this case, a sequence including the B sub-blocks may be referred to as a third to-be-interleaved sequence. Then, sub-block interleaving is performed on the third to-be-interleaved sequence based on a preset sub-block interleaving sequence to obtain a third interleaved sequence, so as to obtain Y interleaved bit sequences. Therefore, bit sequences carried in the sub-blocks may be sequentially sent according to a numbering sequence of the B sub-blocks in the third interleaved sequence, to complete HARQ sending.

In a possible implementation, a length of the sub-block interleaving sequence may be related to a mother code length of a polar code. For example, when a maximum mother code length Nₘ of the polar code is 8192, a length of a sub-block interleaving sequence corresponding to the polar code may be 256. It should be noted that a maximum mother code length Nₘ of an existing NR polar code is 1024, and a length of a sub-block interleaving sequence corresponding to the existing NR polar code is 32=1024/32. Therefore, when the maximum mother code length Nₘ of the polar code is 8192, the length of the sub-block interleaving sequence corresponding to the polar code may be 8192/32=256.

Correspondingly, when the maximum mother code length Nₘ of the polar code for the sub-block interleaving sequence is 4096, the length of the sub-block interleaving sequence corresponding to the polar code may be 128. For example, the sub-block interleaving sequence may be extracted, for example, by using the extraction methods shown in the first example to the seventh example, from the sub-block interleaving sequence whose length is 256 and that corresponds to the mother code length of 8192. In this way, the sub-block interleaving sequence whose length is 128 may be used as a new sub-block interleaving sequence, to adapt to an application scenario in which a mother code length is short.

Correspondingly, when the maximum mother code length Nₘ of the polar code for the sub-block interleaving sequence is 2048, the length of the sub-block interleaving sequence corresponding to the polar code may be 64. For example, the sub-block interleaving sequence may be extracted from the sub-block interleaving sequence whose length is 128 and that corresponds to the mother code length of 4096, to adapt to an application scenario in which a mother code length is short.

Correspondingly, when the maximum mother code length Nₘ of the polar code for the sub-block interleaving sequence is less than or equal to the maximum mother code length 1024 of the existing NR polar code, but is greater than 32, the length of the sub-block interleaving sequence corresponding to the polar code may be 32. For example, the sub-block interleaving sequence may be extracted from the sub-block interleaving sequence whose length is 64 and that corresponds to the mother code length of 2048, to adapt to an application scenario in which a mother code length is short. The sub-block interleaving sequence may be the sub-block interleaving sequence in the existing NR polar, for example, P(i) shown in Table 5.4.1.1-1.

In this implementation, a length of a corresponding sub-block interleaving sequence may be determined based on a mother code length. For example, when the mother code length becomes shorter, the length of the corresponding sub-block interleaving sequence also becomes shorter accordingly. For example, a sub-block interleaving sequence corresponding to a shorter mother code may be read, in a nested manner, from a sub-block interleaving sequence corresponding to a longer mother code. For another example, a sub-block interleaving sequence corresponding to a longer mother code may be obtained by extending a sub-block interleaving sequence corresponding to a shorter mother code length, as described in the extension methods in the foregoing embodiments. In this implementation, one sub-block interleaving sequence may be used to be compatible with interleaving of sub-blocks with different mother code lengths.

In some implementations, selection of a rate matching manner in low power consumption scenarios may be determined based on a mother code length of a polar code. For example, when the mother code length of the polar code is less than a preset value, a rate matching manner based on sub-block interleaving is supported; or when the mother code length of the polar code is greater than or equal to a preset value, a rate matching manner based on sub-block interleaving is not supported. The preset value may be set based on an actual requirement. This is not specifically limited in this application. For example, the preset value may be 32. If a mother code length obtained through polar code-based channel coding is greater than or equal to 32, it is highly complex to implement rate matching. In this case, a rate matching manner of simple repetition instead of a rate matching manner of puncturing or shortening based on sub-block interleaving is used. For example, a length for sending may be fixed as a mother code length, or rate matching is implemented based on the mother code length through simple repetition. The length for sending may be understood as a length of bits or a quantity of bits that can be borne by a channel. If a mother code length obtained through polar code-based channel coding is less than 32, a rate matching manner based on sub-block interleaving is simple. Therefore, the rate matching manner based on sub-block interleaving, for example, puncturing, shortening, or repetition, may be supported. In this embodiment of this application, the rate matching method based on sub-block interleaving may be implemented based on a rate matching interleaver, and the rate matching interleaver may be a sub-block interleaver determined in this embodiment, for example, the first subsequence S(j).

In this implementation, whether to use the rate matching manner with high complexity, for example, shortening or puncturing, may be determined based on the mother code length, to implement a compromise between rate matching complexity and communication performance.

It should be noted that, in this embodiment of this application, the terminal device may be a low-power device, and channel coding schemes related to the terminal device, for example, a data channel coding scheme and a control channel coding scheme of a passive internet of things (passive IoT), may be the same, and an existing NR control channel coding scheme may be reused. To further reduce power consumption, in the channel coding scheme provided in this embodiment of this application, a maximum mother code length may be reduced to any one of {32 64 128 256}, and a minimum mother code length may be less than 32. For example, the minimum mother code length may be 16. In addition, after performing channel encoding and rate matching, the network device may choose not to perform a bit interleaving (for example, triangular interleaving) operation, to reduce power consumption and reduce encoding/decoding complexity.

It should be understood that when the network device sends an LP-WUS based on the channel coding scheme provided in this embodiment of this application, operations such as detection, demodulation, and decoding performed by the terminal device when the terminal device receives the LP-WUS also need to be correspondingly changed.

FIG. 5 is a diagram of a structure of a communication apparatus according to an embodiment of this application. As shown in FIG. 5, the communication apparatus 500 may include an obtaining module 510 and a processing module 520. The apparatus 500 may be configured to implement the steps/operations performed by the network device in the method shown in FIG. 4.

For example, when the apparatus 500 is configured to implement the method implemented by the network device in FIG. 4, the obtaining module 510 may be configured to implement S410, and the processing module 520 may be configured to implement S420.

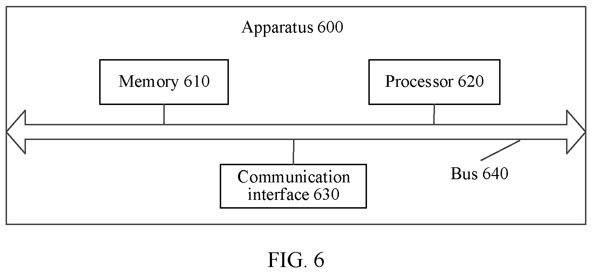

FIG. 6 is a diagram of a structure of a communication apparatus according to another embodiment of this application. The apparatus 600 shown in FIG. 6 may be configured to implement the method performed by the network device in any one of the foregoing embodiments.

As shown in FIG. 6, the apparatus 600 in this embodiment includes a memory 610, a processor 620, a communication interface 630, and a bus 640. The memory 610, the processor 620, and the communication interface 630 implement mutual communication connections through the bus 640.

The memory 610 may be a read-only memory (read-only memory, ROM), a static storage device, a dynamic storage device, or a random access memory (random access memory, RAM). The memory 610 may store a program. When the program stored in the memory 610 is executed by the processor 620, the processor 620 is configured to perform steps/operations performed by the network device in any one of the foregoing embodiments.

The processor 620 may be a general-purpose central processing unit (central processing unit, CPU), a microprocessor, an application-specific integrated circuit (application-specific integrated circuit, ASIC), or one or more integrated circuits, and is configured to execute a related program, to implement the communication method in the method embodiment of this application.

The processor 620 may alternatively be an integrated circuit chip and has a signal processing capability. In an implementation process, the steps of the communication method in the method embodiment of this application may be completed by using an integrated logic circuit of hardware in the processor 620 or by using instructions in a form of software.

The processor 620 may alternatively be a general-purpose processor, a digital signal processor (digital signal processor, DSP), an application-specific integrated circuit (ASIC), a field programmable gate array (field programmable gate array, FPGA) or another programmable logic device, a discrete gate or transistor logic device, or a discrete hardware component. The processor may implement or perform the methods, steps, and logical block diagrams that are disclosed in embodiments of this application. The general-purpose processor may be a microprocessor, or the processor may be any conventional processor or the like.

The steps of the methods disclosed with reference to embodiments of this application may be directly performed and completed by a hardware decoding processor, or may be performed and completed by using a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in the memory 610. The processor 620 reads information in the memory 610, and completes, in combination with hardware of the processor 620, functions that need to be performed by units included in the communication apparatus in this application. For example, the steps/functions performed by the network device in FIG. 4 may be performed. Optionally, the memory 610 may be integrated with the processor 620.

The communication interface 630 may use, but is not limited to, a transceiver apparatus like a transceiver, to implement communication between the apparatus 600 and another device or apparatus.

The bus 640 may include a path for transmitting information between the components (for example, the memory 610, the processor 620, and the communication interface 630) of the apparatus 600.

Some embodiments of this application further provide a computer program product. When the computer program product is run on a processor, the method in the foregoing embodiments may be implemented. Some embodiments of this application further provide a computer-readable storage medium. The computer-readable storage medium includes computer instructions. When the computer instructions are run on a processor, the method in the foregoing embodiments may be implemented.

It should be noted that the modules or components in the foregoing embodiments may be configured as one or more integrated circuits for implementing the foregoing method, for example, one or more application-specific integrated circuits (application-specific integrated circuits, ASICs), one or more microprocessors (digital signal processors, DSPs), or one or more field programmable gate arrays (field programmable gate arrays, FPGAs). For another example, when one of the foregoing modules is implemented in a form in which a processing element invokes program code, the processing element may be a general-purpose processor, for example, a central processing unit (central processing unit, CPU) or another processor that can invoke the program code, for example, a controller. For another example, the modules may be integrated and implemented in a form of a system-on-a-chip (system-on-a-chip, SoC).

All or some of the foregoing embodiments may be implemented by software, hardware, firmware, software modules, or any combination thereof. When software is used to implement embodiments, all or some of embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk Solid State Disk (SSD)), or the like.

The term "a plurality of" in this specification means two or more. The term "and/or" in this specification describes only an association relationship between associated objects and represents that three relationships may exist. For example, A and/or B may represent the following three cases: Only A exists, both A and B exist, and only B exists. In addition, a character "/" in this specification generally represents an "or" relationship between associated objects, and a character "/" in a formula represents a "divisible" relationship between associated objects. In addition, it should be understood that, in the description of this application, terms such as "first" and "second" are merely used for distinguishing and description, but cannot be understood as indicating or implying relative importance, and cannot be understood as indicating or implying a sequence.

It may be understood that various numbers in embodiments of this application are merely used for distinguishing for ease of description, and are not used to limit the scope of embodiments of this application.

It may be understood that sequence numbers of the foregoing processes do not mean execution sequences in embodiments of this application. The execution sequences of the processes should be determined based on functions and internal logic of the processes, and should not be construed as any limitation on the implementation processes of embodiments of this application.

## Claims

1. A communication method, wherein the method is applied to a network device, and the method comprises:
obtaining a first to-be-interleaved sequence, wherein the first to-be-interleaved sequence comprises N sub-blocks, and N is an integer greater than 1; and
performing sub-block interleaving processing on the first to-be-interleaved sequence based on a first subsequence, wherein the first subsequence comprises N elements, the N elements are in one-to-one correspondence with the N sub-blocks, each of the N elements indicates a sequence number of a corresponding sub-block in the first to-be-interleaved sequence, and the first subsequence meets a preset relationship.

2. The method according to claim 1, wherein that the first subsequence meets the preset relationship comprises:
the first subsequence and a first sequence meets the preset relationship, wherein the first sequence is a known sequence.

3. The method according to claim 2, wherein the first subsequence comprises an element less than N in the first sequence, N is less than or equal to M, and M is a length of the first sequence; or
the first subsequence comprises an element less than N in a second subsequence, and the second subsequence is a sequence comprising a difference between each of elements greater than or equal to N in the first sequence and N.

4. The method according to claim 2, wherein the first subsequence comprises an element less than N in a third subsequence, the third subsequence is a sequence formed by a quotient obtained by dividing, by a first ratio, an element in the first sequence that yields a remainder R when divided by the first ratio, the first ratio is a quotient of M divided by N, N is less than or equal to M, M is a length of the first sequence, and R comprises a non-negative integer less than the first ratio.

5. The method according to claim 2, wherein the first subsequence comprises an element less than N in a fourth subsequence, the fourth subsequence is a sequence formed by a quotient of each element in the first sequence divided by a first ratio, the first ratio is a quotient of M divided by N, N is less than or equal to M, and M is a length of the first sequence.

6. The method according to claim 2, wherein the first subsequence comprises an element less than N in a fifth subsequence, the fifth subsequence is a sequence formed by quotients of a plurality of elements comprised in the first sequence divided by 2, the plurality of elements are in one-to-one correspondence with a plurality of sub-blocks, each of the plurality of elements indicates a sequence number of a corresponding sub-block in a second to-be-interleaved sequence, a sequence number of each of the plurality of sub-blocks in an interleaved sequence is an odd number or an even number, and the interleaved sequence is obtained by performing sub-block interleaving processing on the second to-be-interleaved sequence by the first sequence.

7. The method according to any one of claims 1 to 5, wherein that the first subsequence meets a first preset relationship comprises:
the first subsequence is any one of the following sequences: {0 1 2 3 4 8 5 9 6 10 7 11 12 13 14 15}, {0 1 2 4 3 5 6 7 8 9 10 11 12 13 14 15}, {0 1 2 3 4 5 6 7 8 9 10 12 11 13 14 15}, {0 3 2 1 4 5 8 7 6 9 10 11 15 13 14 12}, or {0 3 2 1 4 5 8 7 6}.

8. The method according to claim 1, wherein that the first subsequence meets the preset relationship comprises:
an (i+A)^{th} element in the first subsequence is equal to a sum of an i^{th} element and A, wherein N=2×A, A is an integer greater than 1, and i is a positive integer less than or equal to A.

9. The method according to claim 8, wherein a j^{th} element in the first subsequence is equal to a j^{th} element in a first sequence, and j is a positive integer less than or equal to A.

10. The method according to claim 1, wherein that the first subsequence meets the preset relationship comprises:
an (i+A)^{th} element in the first subsequence is equal to a sum of an i^{th} element and 1, wherein N=2×A, A is an integer greater than 1, and i is a positive integer less than or equal to A.

11. The method according to claim 10, wherein a j^{th} element in the first subsequence is equal to T times a j^{th} element in a first sequence, T is a ratio of N to M, M is a length of the first sequence, and j is a positive integer less than or equal to A.

12. The method according to claim 2, 3, 4, 5, 6, 9, or 11, wherein the first sequence is {0 1 2 4 3 5 6 7 8 16 9 17 10 18 11 19 12 20 13 21 14 22 15 23 24 25 26 28 27 29 30 31}.

13. The method according to any one of claims 8 to 11, wherein that the first subsequence meets the preset relationship comprises:
the first subsequence is {0 1 2 4 3 5 6 7 8 16 9 17 10 18 11 19 12 20 13 21 14 22 15 23 24 25 26 28 27 29 30 31 32 33 34 36 35 37 38 39 40 48 41 49 42 50 43 51 44 52 45 53 46 54 47 55 56 57 58 60 59 61 62 63} or {0 2 4 8 6 10 12 14 16 32 18 34 20 36 22 38 24 40 26 42 28 44 30 46 48 50 52 56 54 58 60 62 1 3 5 9 7 11 13 15 17 33 19 35 21 37 23 39 25 41 27 43 29 45 31 47 49 51 53 57 55 59 61 63}.

14. A communication apparatus, comprising functional modules configured to implement the method according to any one of claims 1 to 13.

15. A communication apparatus, comprising a processor, wherein the processor is coupled to a memory, the memory is configured to store a computer program, and when the processor invokes the computer program, the apparatus is caused to perform the method according to any one of claims 1 to 13.

16. A computer program product, comprising computer program code, wherein when the computer program code is run on a computer, the computer is caused to implement the method according to any one of claims 1 to 13.

17. A computer-readable medium, wherein the computer-readable medium stores program code to be executed by a computer, and the program code comprises instructions used to perform the method according to any one of claims 1 to 13.
